# EUROPÄISCHE PATENTSCHRIFT

(11) **EP 2 148 178 B1**
(45) Veröffentlichungstag und Bekanntmachung des Hinweises auf die Patenterteilung: **18.04.2012**
(21) Anmeldenummer: 08013238.4
(22) Anmeldetag: 23.07.2008
(51) Int. Cl.: G01D 5/12, H04L 7/00

(54) **Verfahren zur digitalen, bidirektionalen Datenübertragung**
Digital, bidirectional data transfer method
Procédé de transmission de données numérique bidirectionnel

(43) Veröffentlichungstag der Anmeldung: 27.01.2010
(73) Patentinhaber: SICK STEGMANN GmbH, 78166 Donaueschingen (DE)
(72) Erfinder: Francescon, Massimo, 10126 Turin (IT); Armbruster, Ulrich, 78166 Donaueschingen (DE); Stein, Simon, Dr., 79102 Freiburg (DE)
(74) Vertreter: Patentanwälte Westphal, Mussgnug & Partner

(56) Entgegenhaltungen:
- EP-A- 0 100 386
- EP-A- 1 434 382
- DE-A1-102004 025 388
- DE-A1-102006 022 284
- US-A- 5 428 603

## Beschreibung

Die Erfindung betrifft ein Verfahren zur digitalen, bidirektionalen Datenübertragung gemäß dem Oberbegriff des Patentanspruchs 1. Die Erfindung betrifft insbesondere ein Verfahren zur digitalen, bidirektionalen Datenübertragung zwischen einer Steuereinheit und einem Positionsmesssystem.

Die EP 0 171 579 A1 offenbart eine Anordnung zur seriellen Übertragung der Messwerte wenigstens eines Messwertwandlers, bei welcher die parallel anstehenden Messwerte in einem Parallel-Serien-Schieberegister gespeichert und seriell im Takt einer Taktimpuslfolge übertragen werden, die von einer die Messwerte aufnehmenden Verarbeitungseinheit erzeugt wird. Nachteilig dabei ist, dass eine Datenübertragung lediglich von dem Messwertwandler zu der Verarbeitungseinheit erfolgt.

Die DE 100 30 358 A1 offenbart ein Verfahren zur seriellen Datenübertragung zwischen einem Positionsmesssystem und einer Verarbeitungseinheit, bei welchem vom Positionsmesssystem Positionsdaten und weitere Daten als digitale Datenwörter an die Verarbeitungseinheit übertragen werden. Auf einen Positionsanforderungsbefehl der Verarbeitungseinheit hin erfolgt eine Übertragung aktueller Positionsdaten vom Positionsmesssystem zur Verarbeitungseinheit. Auf die Positionsdaten werden nachfolgend stets weitere Daten übertragen, deren Verarbeitung zeitunkritisch ist. Ferner wird von der Verarbeitungseinheit zur Anforderung von Positionsdaten ein Positionsanforderungsbefehl an das Positionsmesssystem übertragen, auf den nachfolgend stets ebenfalls weitere Daten übertragen werden, deren Verarbeitung zeitunkritisch ist. Die Übertragung von Daten von der Verarbeitungseinheit zu dem Positionsmesssystem erfolgt dabei auf einer anderen Datenleitung als die Übertragung der Daten von dem Positionsmesssystem zu der Verarbeitungseinheit. Zudem ist ein konkreter Positionsanforderungsbefehl nötig, um Positionsdaten zu übertragen, wobei dadurch die Zeit zwischen der Übertragung zweier Positionsdaten vergleichsweise lang sein kann.

Da die Übertragung von Daten auf einer einzigen Leitung sehr störanfällig ist, ist es weiterhin bekannt, Daten differenziell zu übertragen, wozu zwei miteinander verdrillte Leitungen verwendet werden, um auf beiden Leitungen ein Signal mit umgekehrtem Vorzeichen zu übertragen. Der US 4 486 739 ist für ein solches Datenübertragungsverfahren eine Möglichkeit zu entnehmen, welche einen Gleichspannungsausgleich gewährleistet, welches insbesondere als 8B/10B-Kodierung bekannt ist.

Um die Steuereinheit und das Positionsmesssystem miteinander zu synchronisieren, ist es bekannt, ein Taktsignal über eine zusätzliche Datenleitung zwischen der Steuereinheit und dem Positionsmesssystem zu übertragen. Es ist jedoch auch bekannt, das Taktsignal zur Synchronisierung der Steuereinheit und des Positionsmesssystems auf den Datenleitungen zwischen der Steuereinheit und dem Positionsmesssystem zu übertragen, um auf diese Weise Datenleitungen einzusparen.

Die DE 10 2006 022 284 A1 offenbart ein Verfahren zur digitalen, bidirektionalen Datenübertragung zwischen einer Steuereinheit und einem Positionsmesssystem basierend auf der Übertragung von Frames einer vorgegebenen Bitlänge. In jedem Frame ist wenigstens eine erste Bitlänge für die Sendung von Daten von der Steuereinheit zu dem Positionsmesssystem und wenigstens eine zweite Bitlänge für die Sendung von Daten von dem Positionsmesssystem zu der Steuereinheit vorgesehen. Weiterhin ist in dem Frame ein Zeitschlitz vorgesehen, in welchem weder von der Steuereinheit an das Positionsmesssystem noch von dem Positionsmesssystem zu der Steuereinheit Daten übertragen werden und in welchem ein Triggerimpuls von der Steuereinheit an das Positionsmesssystem übertragen wird, welcher eine Positionsdatenaufnahme bei dem Positionsmesssystem triggert. Durch dieses Verfahren ist eine jitterfreie Übertragung des Abtastzeitpunkts möglich, sodass kein unerwünschter Zeitverzug zwischen dem Triggerimpuls und der Positionsdatenaufnahme in dem Positionsmesssystem vorliegt.

Die Aufgabe der Erfindung besteht darin, ein Verfahren zur digitalen, bidirektionalen Datenübertragung zwischen einer Steuereinheit und einem Positionsmesssystem effektiver zu gestalten.

Die Aufgabe der Erfindung wird gelöst durch ein Verfahren mit den Merkmalen des Patentanspruchs 1.

Vorteilhafte Ausgestaltungen und Weiterbildungen der Erfindung sind in den Unteransprüchen angegeben.

Das erfindungsgemäße Verfahren zur digitalen, bidirektionalen Datenübertragung zwischen einer Steuereinheit und einem Positionsmesssystem basierend auf der Übertragung von Frames einer vorgegebenen Bitlänge, wobei in jedem Frame wenigstens eine erste Bitlänge für die Sendung von Daten von der Steuereinheit zu dem Positionsmesssystem und wenigstens eine zweite Bitlänge für die Sendung von Daten von dem Positionsmesssystem zu der Steuereinheit vorgesehen ist, wobei ein Zeitschlitz in dem Frame vorgesehen ist, in welchem weder von der Steuereinheit des Positionsmesssystems noch von dem Positionsmesssystem zu der Steuereinheit Daten übertragen werden und in welchem ein Triggerimpuls von der Steuereinheit an das Positionsmesssystem übertragen wird, welcher eine Positionsdatenaufnahme bei dem Positionsmesssystem triggert, zeichnet sich dadurch aus, dass ein Taktsignal zur Synchronisierung der Steuereinheit und des Positionsmesssystems innerhalb der ersten Bitlänge von der Steuereinheit zu dem Positionsmesssystem übertragen wird, das nach der durch den Triggerimpuls getriggerten Positionsdatenaufnahme die aufgenommenen Positionsdaten von dem Positionsmesssystem an die Steuereinheit übertragen werden und das zwischen der Übertragung von zwei aufeinander folgenden Triggerimpulsen wenigstens ein zusätzliches Positionsdatenanforderungssignal von der Steuereinheit an das Positionsmesssystem übertragen wird, welches eine weitere Positionsdatenaufnahme und eine anschließende Übertragung der aufgenommenen Positionsdaten von dem Positionsmesssystem an die Steuereinheit triggert.

Die Übertragung des Taktsignals zur Synchronisierung der Steuereinheit und des Positionsmesssystems innerhalb der ersten Bitlänge von der Steuereinheit zu dem Positionsmesssystem hat den Vorteil, dass keine zusätzliche Datenleitung zur Übertragung des Taktsignals benötigt wird. Die Zahl der Datenleitungen zwischen der Steuereinheit und dem Positionsmesssystem kann somit verringert werden.

Die Übertragung von wenigstens einem, vorzugsweise mehreren zusätzlichen Positionsdatenanforderungssignalen zwischen zwei aufeinander folgenden Triggerimpulsen und die anschließende weitere Positionsdatenaufnahme und Übertragung der aufgenommenen Positionsdaten erweist den Vorteil, dass das Positionsdatensignal deutlich häufiger an der Steuereinheit anliegen kann und somit in kürzeren Zeitabständen Informationen über die Positionsdaten des Positionsmesssystems vorliegen. Wesentlich dabei ist, dass die Trigger-impulse extern vorgegeben werden, während die zusätzlichen Datenanforderungssignale intern in der Steuereinheit generiert werden und daher insbesondere unabhängig von dem externen Triggerimpuls sind.

Vorzugsweise werden in dem Zeitintervall zwischen zwei Triggerimpulsen periodisch mehrere Positionsanforderungssignale von der Steuereinheit an das Positionsmesssystem übertragen, wobei besonders bevorzugt die Zeit zwischen zwei Triggerimpulsen ein ganzzahliges Vielfaches der Zeit zwischen zwei Positionsanforderungssignalen ist. Auf diese Weise ergibt sich eine zyklische Übertragung von Positionsdaten mit einem deutlich kürzeren Zeitabstand als lediglich auf Anforderung durch die Übertragung der externen Triggerimpulse hin.

Gemäß einer bevorzugten Ausführungsform der Erfindung erfolgt die Datenübertragung über zwei Leitungen, insbesondere auf zwei zwischen der Steuereinheit und dem Positionsmesssystem angeordneten Versorgungsleitungen. Die Datenübertragung über zwei Leitungen hat den Vorteil, dass sie deutlich weniger störanfällig ist als die Datenübertragung lediglich auf einer Leitung und insbesondere gemäß einer bevorzugten Ausführungsform der Erfindung eine differenzielle Datenübertragung ermöglicht. Die Datenübertragung insbesondere auf zwei zwischen der Steuereinheit und dem Positionsmesssystem angeordneten Versorgungsleitungen, insbesondere Strom- und Spannungsversorgungsleitungen, ermöglicht es, die Zahl der zwischen der Steuereinheit und dem Positionsmesssystem angeordneten Leitungen insgesamt auf zwei zu reduzieren und somit die Kosten für die Anordnung gering zu halten.

Um die Anfälligkeit gegen Störungen bei der Datenübertragung weiter zu reduzieren, ist das Verfahren vorzugsweise derart ausgestaltet, dass bei der Datenübertragung ein Gleichspannungsausgleich gewährleistet ist, was insbesondere durch Verwendung eines 8B/10B-Codes erreicht wird. Diese Art der Datenübertragung hat zudem den Vorteil, dass die Zahl der Bitwechsel genügend hoch ist und auf diese Art und Weise zusätzlich eine zuverlässige Übertragung des Taktsignals zur Synchronisierung der Steuereinheit und der Positionsmesseinheit auf denselben Datenleitungen, die auch zur Datenübertragung verwendet werden, gewährleistet ist.

Um die Bandbreite zu reduzieren, werden die Positionsdaten oder auch weitere zu übertragende Daten als Differenzdaten erster oder zweiter Ordnung übertragen. Unter Differenzdaten ist dabei die Änderung, d. h. die Differenz des Absolutwerts zum letzten Absolutwert, zu verstehen. Unter Differenzdaten zweiter Ordnung ist dementsprechend die Änderung, d. h. die Differenz zum letzten Differenzwert bzw. zur letzten Änderung zu verstehen. Wird für die Übertragung des absoluten Positionswerts 40 Bit benötigt, kann bei Übertragung der Positionsdaten als Differenzdaten erster Ordnung die Zahl der Bits auf 24 und bei Übertragung der Positionsdaten als Differenzdaten zweiter Ordnung die Zahl der Bits auf lediglich 11 reduziert werden, wenn übliche Wertebereichseinschränkungen für die Differenzwerte erste bzw. zweite Ordnung in Positionsmesssystemen vorausgesetzt werden.

Um die Fehlerraten bei einer Übertragung von Differenzdaten jedoch möglichst gering zu halten, werden vorzugsweise nach einer vorgegebenen Anzahl von Differenzdaten, beispielsweise nach 2, 4 oder 8 übertragenen Differenzdaten, die zu übertragenden Daten zusätzlich als absolute Daten übertragen. Die aus den Differenzdaten rückgerechneten absoluten Daten werden mit den exakten absoluten Daten verglichen und bei Auftreten einer Differenz verworfen und der exakte absolute Wert den weiteren Berechnungen zu Grunde gelegt.

Vorzugsweise ist in dem erfindungsgemäßen Verfahren eine Überprüfung der Datenübertragung auf Fehler vorgesehen, insbesondere durch ein CRC(Cyclic Redundancy Check)-Verfahren vorgesehen.

Gemäß einer besonders bevorzugten Ausführungsform der Erfindung erfolgt die Datenübertragung redundant, um insbesondere ein sicheres Verfahren zur Datenübertragung zwischen der Steuereinheit und dem Positionsmesssystem bereitzustellen, um somit einen sicheren Sensor im Sinne von Maschinensicherheit bereitzustellen, was bedeutet, dass der Sensor den einschlägigen Normen EN954 oder EN61508, welche sich mit der Maschinensicherheit befassen, genügen muss. Die redundante Datenübertragung kann beispielsweise durch eine zweikanalige Struktur von voneinander unabhängigen Übertragungen der Positionsdaten, durch Teststrukturen oder sich selbst überprüfende Strukturen gewährleistet werden oder es muss auf sonstige Art und Weise auch bei auftretenden Fehlern weiterhin eine zuverlässig Funktionsweise gewährleistet sein und möglich sein, die Fehler selbstständig zu erkennen.

Vorteilhafterweise werden zusätzlich zu den Positionsdaten weitere Daten, insbesondere Messdaten von weiteren Messsystemen, deren Datenaufnahme insbesondere ebenfalls durch das Triggersignal getriggert werden kann, übertragen, um auf diese Art und Weise die Verwendung von zusätzlichen Datenleitungen, insbesondere für weitere externe Sensoren, vermeiden zu können. Die weiteren Messsysteme können dabei beispielsweise als Beschleunigungssensoren, Vibrationssensoren, Drehmomentsensoren oder Temperatursensoren ausgebildet sein.

Falls die Zeit zwischen den einzelnen Positionsdatenanforderungssignalen zu kurz ist, um sämtliche gewünschte oder bereitstehende Daten übertragen zu können, ist gemäß einer bevorzugten Ausführungsform der Erfindung vorgesehen, dass die einzelnen zu übertragenden Daten in Datensegmente geteilt werden, welche insbesondere segmentweise nach den einzelnen Positionsdatenanforderungssignalen übertragen werden können.

Das erfindungsgemäße System weist eine Steuereinheit und ein Positionsmesssystem auf, zwischen welchen bidirektional Daten übertragen werden, wobei die Übertragung der Daten nach einem Verfahren gemäß einem der vorhergehenden Ansprüche abläuft. Dabei sind die Positionsmesseinheiten besonders bevorzugt als Drehgeber ausgebildet. Vorzugsweise sind zwischen der Steuereinheit und dem Positionsmesssystem zwei Versorgungsleitungen angeordnet, welche gleichzeitig zur Datenübertragung verwendet werden, um die Anzahl der Datenleitungen zwischen der Steuereinheit und des Positionsmesssystems zu reduzieren und insbesondere auf zwei zu beschränken. Gemäß einer besonders bevorzugten Ausführungsform sind die Datenleitungen, die insbesondere gleichzeitig die Versorgungsleitungen darstellen, in ein Motorkabel integriert.

Die Erfindung wird anhand der nachfolgenden Figuren ausführlich erläutert. Es zeigt:
- Figur 1: eine schematische Darstellung eines erfindungsgemäßen Systems,
- Figur 2: ein Datenübertragungsprotokoll gemäß einer ersten er- findungsgemäßen Ausführungsform,
- Figur 3: ein Datenübertragungsprotokoll gemäß einer zweiten erfindungsgemäßen Ausführungsform,
- Figur 4: ein Datenübertragungsprotokoll gemäß einer dritten erfindungsgemäßen Ausführungsform,
- Figur 5: ein Datenübertragungsprotokoll gemäß einer vierte er- findungsgemäßen Ausführungsform,
- Figur 6: eine Schaltungsanordnung für die Übertragung der Da- ten mit vier Leitungen und
- Figur 7: eine Schaltungsanordnung für die Übertragung der Da- ten mit zwei Leitungen.

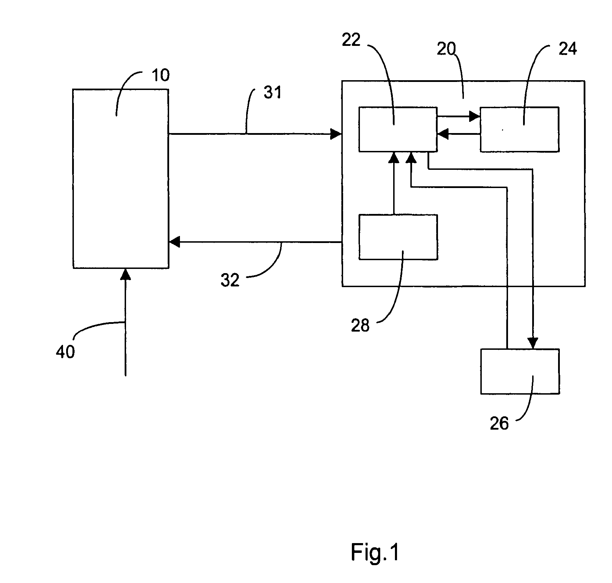

Figur 1 zeigt eine schematische Darstellung eines Systems mit einer Steuereinheit 10 und einem Positionsmesssystem 20, zwischen welchen über zwei Datenleitungen 31, 32 Daten in beide Richtungen basierend auf der Übertragung von Frames einer vorgegebenen Bitlänge übertragen werden können. Insbesondere ist in jedem Frame wenigstens eine erste Bitlänge für die Sendung von Daten von der Steuereinheit 10 zu dem Positionsmesssystem 20 und wenigstens eine zweite Bitlänge für die Sendung von Daten von dem Positionsmesssystem 20 zu der Steuereinheit vorgesehen.

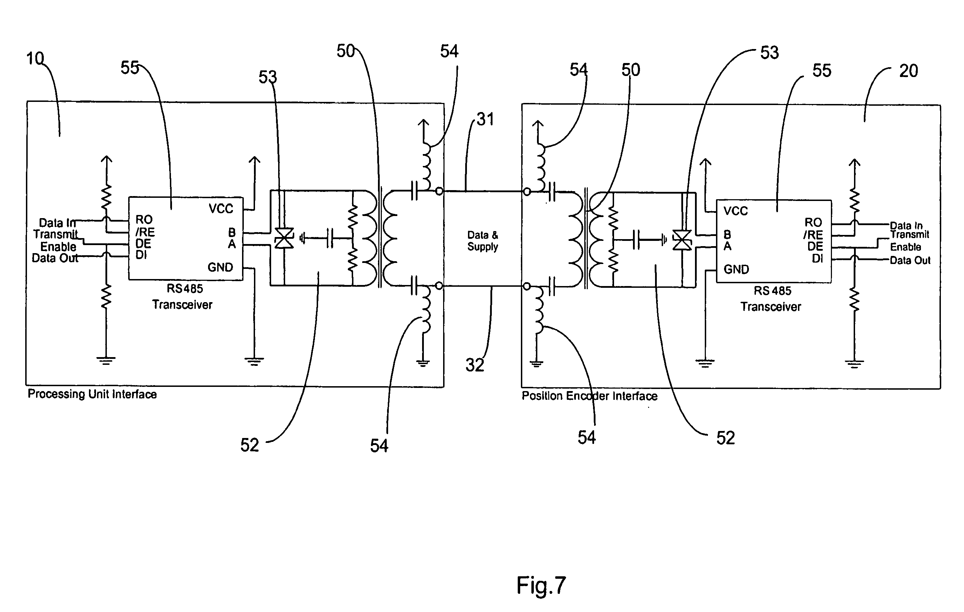

Die beiden Datenleitungen 31, 32 können gleichzeitig die Versorgungsleitungen von der Steuereinheit 10 zu dem Positionsmesssystem 20 darstellen, um auf diese Art und Weise lediglich zwei Datenleitungen zwischen der Steuereinheit 10 und dem Positionsmesssystem 20 bereitstellen zu müssen (vgl. auch Figur 7).

Die Datenleitungen 31, 32 sind vorzugsweise miteinander verdrillt, um Störeinflüsse zu verringern. Um die Störanfälligkeit der Datenleitungen 31, 32 gegen äußere Einflüsse weiter zu verringern, werden die Daten insbesondere derart übertragen, dass ein Gleichspannungsausgleich gewährleistet ist. Dies erfolgt insbesondere durch Verwendung eines 8B/10B-Codes.

Das Positionsmesssystem 20 weist eine Kommunikationseinheit 22 zur Kommunikation mit der Steuereinheit 10, eine Datenaufnahmeeinheit 24 zur Erfassung der Positionsdaten beispielsweise eines Drehgebers und eine Speichereinheit 26 auf, wobei in der Speichereinheit 26 beispielsweise interne Daten des Positionsmesssystems und/oder des Drehgebers hinterlegt sind. Das Positionsmesssystem kann mit weiteren Messsystemen 28 verbunden sein, welche beispielsweise als Beschleunigungssensoren, Vibrationssensoren, Drehmomentsensoren oder Temperatursensoren ausgebildet sind und zusätzliche Daten und Informationen über den Zustand des Positionsmesssystem 20, insbesondere den Drehgeber liefern können, welche zusätzlich zu den Positionsdaten über die Datenleitungen 31, 32 an die Steuereinheit übertragen werden können. Mit dem Beschleunigungssensor oder dem Vibrationssensor können beispielsweise die Beschleunigung bzw. die Vibration des Drehgebers oder des Motorsystems, mit welchem der Drehgeber verbunden ist, bestimmt werden. Mit dem Drehmomentsensor kann das Drehmoment des Schafts des Drehgebers oder des Motors bestimmt werden. Der Temperatursensor kann die Temperatur des Drehgebers oder Motors überwachen. Sämtliche Sensoren können vorzugsweise Abweichungen von vorgegebenen Sollwerten feststellen, um somit das System auf auftretende Fehler überprüfen zu können.

Der Steuereinheit 10 wird ein externer Triggerimpuls 40 zugeleitet, welcher die Positionsdatenaufnahme bei dem Positionsmesssystem 20 triggert. Dazu muss der Triggerimpuls 40 möglichst jitterfrei von der Steuereinheit 10 an das Positionsmesssystem 20 übertragen werden. Dies geschieht vorzugsweise derart, dass in dem Frame ein Zeitschlitz vorgesehen ist, in welchem weder von der Steuereinheit 10 an das Positionsmesssystem 20 noch von dem Positionsmesssystem 20 an die Steuereinheit 10 Daten übertragen werden und in welchem der Triggerimpuls 40 direkt von der Steuereinheit 10 an das Positionsmesssystem 20 übertragen wird. Auf diese Art und Weise können Zeitverzögerungen, die durch das Übertragen des Triggerimpulses in dem vorgegebenen Takt der Steuereinheit 10 auftreten können, vermieden werden.

Die Synchronisation der Steuereinheit 10 mit dem Positionsmesssystem 20 erfolgt mittels eines Taktsignals, welches ebenfalls über die Datenleitungen 31, 32 übertragen wird, so dass keine separate Datenleitung zur Übertragung dieses Taktsignals erforderlich ist. In dem Frame ist dazu ebenfalls eine bestimmte Bitlänge vorgesehen. Durch die Verwendung einer 8B/10B-Kodierung ist dabei insbesondere gewährleistet, dass die zur zuverlässigen Übertragung des Taktsignals erforderliche hohe Rate an Bitwechseln gegeben ist.

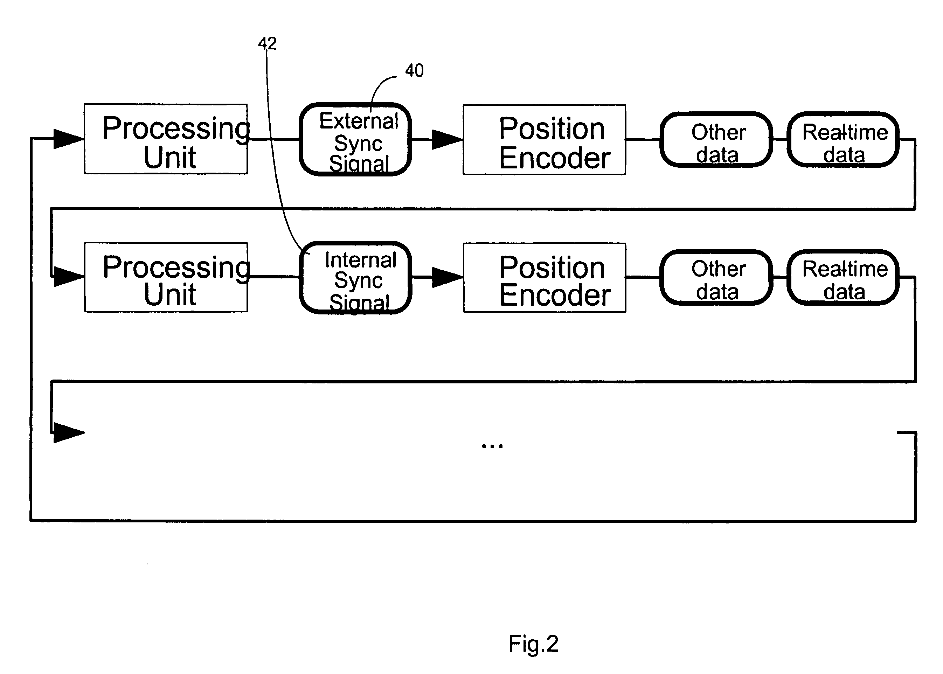

Figur 2 zeigt ein Datenübertragungsprotokoll, welches insbesondere eine Framelänge darstellt. Von der Steuereinheit 10 (Processing Unit) wird der Triggerimpuls 40 (External Sync Signal) wie zuvor beschrieben innerhalb eines Zeitschlitzes in dem Frame an das Positionsmesssystem 20 (Position Encoder) übertragen. Dieser Triggerimpuls 40 triggert eine Positionsdatenaufnahme in dem Positionsmesssystem 20. Während dieser Positionsdatenaufnahme können beispielsweise zeitunkritische Daten (other data) von dem Positionsmesssystem 20 an die Steuereinheit 10 übertragen werden. Bei den zeitunkritischen Daten kann es sich beispielsweise um Messdaten eines Teils der zuvor beschriebenen weiteren Messsysteme 28, beispielsweise von Temperaturdaten, oder um Systeminformationen zu dem Positionsmesssystem 20 handeln. Sobald die Positionsdatenaufnahme in dem Positionsmesssystem 20 erfolgt ist, werden die Positionsdaten von dem Positionsmesssystem 20 an die Steuereinheit 10 übertragen. Bei den Positionsdaten handelt es sich um zeitkritische Daten (real-time data), welche im Takt der Steuereinheit 10 und des Positionsmesssystems 20 übertragen werden müssen. Weitere zeitkritische Daten können Daten eines Teils der zuvor beschriebenen weiteren Messsysteme 28, beispielsweise Daten eines Beschleunigungssensors, eines Vibrationssensors oder eines Drehmomentsensors sein.

Wie aus Figur 2 ersichtlich, wird pro Frame jeweils nur ein Triggerimpuls 40 übertragen. Da der zeitliche Abstand zwischen zwei Triggerimpulses 40 jedoch vergleichsweise groß sein kann, liegen die Positionsdaten für manche Anwendungszwecke zu selten an. Daher wird in der Steuereinheit 10 zu Beginn der Datenübertragung der zeitliche Abstand zweier Triggerimpulse 40 bestimmt. Die Steuereinheit 10 generiert anschließend intern Positionsanforderungssignale 42 (Internal Sync Signal), die zwischen zwei aufeinanderfolgenden Triggerimpulsen 40 periodisch von der Steuereinheit 10 an das Positionsmesssystem 20 übertragen werden. Auf jedes der Positionsanforderungssignale 42 erfolgt erneut eine Positionsdatennahme und eine Übertragung der Positionsdaten von dem Positionsmesssystem 20 an die Steuereinheit 10. Somit liegen die Positionsdaten deutlich häufiger an der Steuereinheit 10 an, wodurch eine genauere Erfassung der Positionsdaten möglich ist. Während der Positionsdatennahme können erneut weitere zeitunkritische Daten übertragen werden. Je nach zeitlichem Abstand der Triggerimpulse 40 und nach gewünschter Häufigkeit der Abfrage der Positionsdaten kann zwischen zwei aufeinanderfolgenden Triggerimpulses 40 nur ein oder auf mehrere zusätzliche Positionsdatenanforderungssignale 42 übertragen werden.

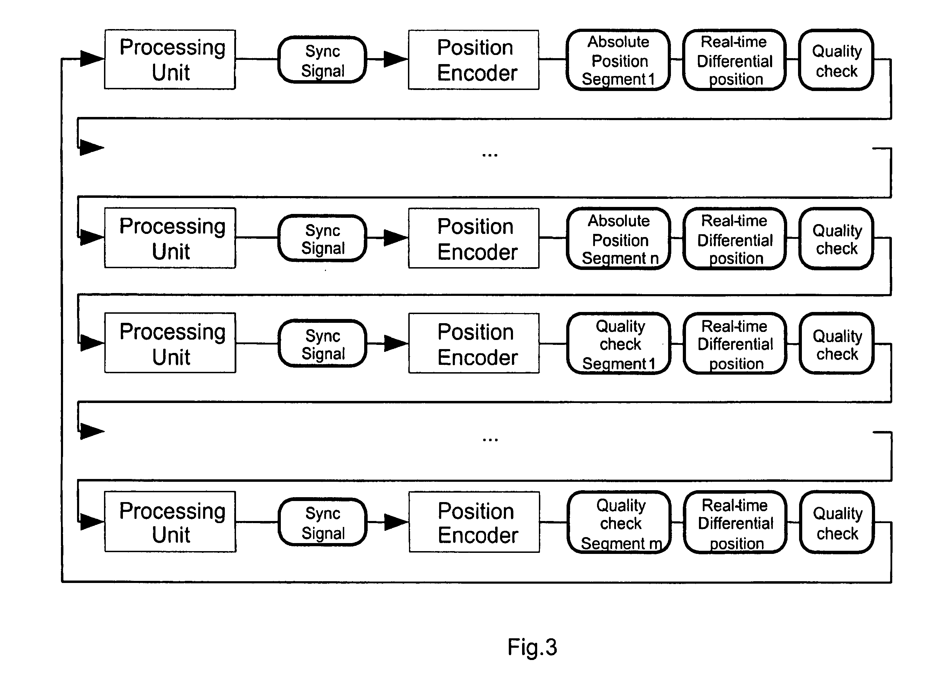

Figur 3 zeigt ein weiteres Datenübertragungsprotokoll mit mehreren Frames, wobei jeweils eine Zeile des schematischen Datenübertragungsprotokolls ein Frame darstellt und zur besseren Übersicht die zusätzlichen Positionsdatenanforderungssignale gemäß Figur 2 mit den nachfolgend übertragenen Daten ausgelassen wurden.

Um die Bandbreite zu erhöhen, werden vorzugsweise die Positionsdaten und gegebenenfalls auch die weiteren zeitkritischen und zeitunkritischen Daten als Differenzdaten (real-time Differential position) übertragen, wobei auf die einmalige Übertragung der absoluten Positionsdaten bei der Übertragung des nächsten Positionsdatenwerts lediglich die Änderung, d. h. die Differenz, zur dem vorhergehenden Wert und nicht mehr der absolute Wert übertragen wird. Werden dabei Differenzdaten erster Ordnung übertragen, kann die Zahl der nötigen Bits von 40 auf 24 verringert werden, bei Übertragung von Differenzdaten zweiter Ordnung kann die Zahl der nötigen Bits sogar auf 11 verringert werden. Zur Überprüfung der Übertragungsqualität wird jedoch zusätzlich zu den Differenzdaten in gewissen Abständen, beispielsweise nach zwei, vier oder acht übertragenen Differenzdaten, die Positionsdaten erneut als absolute Daten (absolute Position) übertragen, um die aus den Differenzdaten rückgerechneten absoluten Positionsdaten mit den tatsächlich vorliegenden absoluten Positionsdaten vergleichen zu können und bei Abweichung gegebenenfalls auf die korrekten, tatsächlich vorliegenden absoluten Positionsdaten zurückgreifen zu können.

Je nach Abstand der Triggerimpulse 40 bzw. der Positionsdatenanforderungssignale 42 ist der Abstand zwischen den Triggerimpulsen 40 bzw. den Positionsdatenanforderungssignalen 42 zu kurz, um beispielsweise die absoluten Positionsdaten oder auch weitere zu übertragene Daten zusätzlich zu den Differenzdaten vollständig übertragen zu können. In diesem Fall ist es, wie in Figur 3 ersichtlich, vorzugsweise möglich, die entsprechenden zu übertragenen Daten in eine gewisse Zahl n von Datensegmenten aufzuteilen und zwischen den Triggerimpulsen 40 bzw. den Positionsdatenanforderungssignalen 42 jeweils nur ein Datensegment zu übertragen, wobei nach Übertragung der n Datensegmente der absoluten Positionsdaten (absolute Position segment 1 bis n) die vollständigen Daten rekonstruierbar sind.

Alternativ oder zusätzlich zu der Übertragung der absoluten Positionsdaten kann in jedem Frame auch eine Überprüfung auf Fehler, beispielsweise durch ein CRC(cyclic redundancy check)-Verfahren durchgeführt werden. Auch die dabei innerhalb des Frames zu übertragenen Daten (Quality check) können als absolute Daten, als differentielle Daten oder teilweise als Datensegmente (Quality check Segment 1 bis m) übertragen werden. Grundsätzlich ist es dabei möglich, wie in Figur 3 dargestellt vor jeden als Differenzdaten übertragenen Positionsdaten jeweils ein Datensegment entweder von den absoluten Positionsdaten oder von den absoluten Daten der Fehlerüberprüfung zu übertragen. Alternativ kann auf vor jeden als Differenzdaten übertragenen Positionsdaten jeweils ein Datensegment von den absoluten Positionsdaten und von den absoluten Daten der Fehlerüberprüfung übertragen werden.

Die zu übertragenen Daten und Datensegmente können dabei sowohl im Anschluss an den Triggerimpuls als auch im Anschluss an die zusätzlichen Positionsdatenanforderungssignale übertragen werden, je nachdem, auf welche Art und Weise gerade die Positionsdatennahme getriggert wurde.

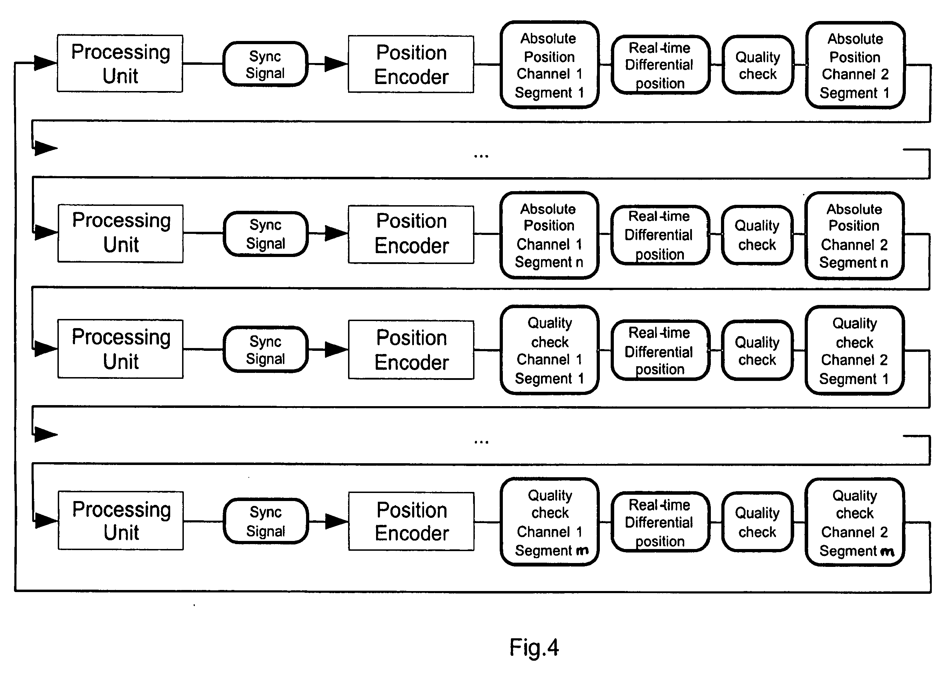

Damit das System als sicheres System ausgebildet werden kann, muss auch das Datenübertragungsprotokoll bestimmten Anforderungen und insbesondere den einschlägigen Sicherheitsnormen genügen. Dazu kann beispielsweise die Datenübertragung redundant erfolgen, wie anhand von Figur 4 beschrieben wird. Auch in Figur 4 sind zur besseren Übersicht die zusätzlichen Positionsdatenanforderungssignale gemäß Figur 2 mit den nachfolgend übertragenen Daten ausgelassen worden. Jeweils eine Zeile stellt somit wiederum ein Frame dar. Das Positionsmesssystem 20 weist einen zweiten Kanal zur unabhängigen Positionsdatennahme von zweiten Positionsdaten (absolute Position Channel 2) auf, wobei die Positionsdaten des zweiten Kanals entweder nur als absolute Positionsdaten, insbesondere wie in Figur 4 dargestellt in Datensegmenten (absolute Position Channel 2 Segment 1 bis 2), oder als Differenzdaten mit zusätzlicher Übertragung der absoluten Positionsdaten nach der Übertragung einiger Differenzdaten übertragen werden. Alternativ oder wie in Figur 4 dargestellt zusätzlich wird auch die Datenübertragung in dem zweiten Kanal auf Fehler überprüft (Quality check Channel 2), insbesondere durch ein CRC-Verfahren, wobei die dazu zu übertragenen Daten ebenfalls wieder als Ganzes oder in Datensegmenten (Quality check Channel 2 Segment 1 to m) - je nach zeitlichem Abstand zwischen den Triggerimpulsen bzw. den Positionsdatenanforderungssignalen - übertragen werden können.

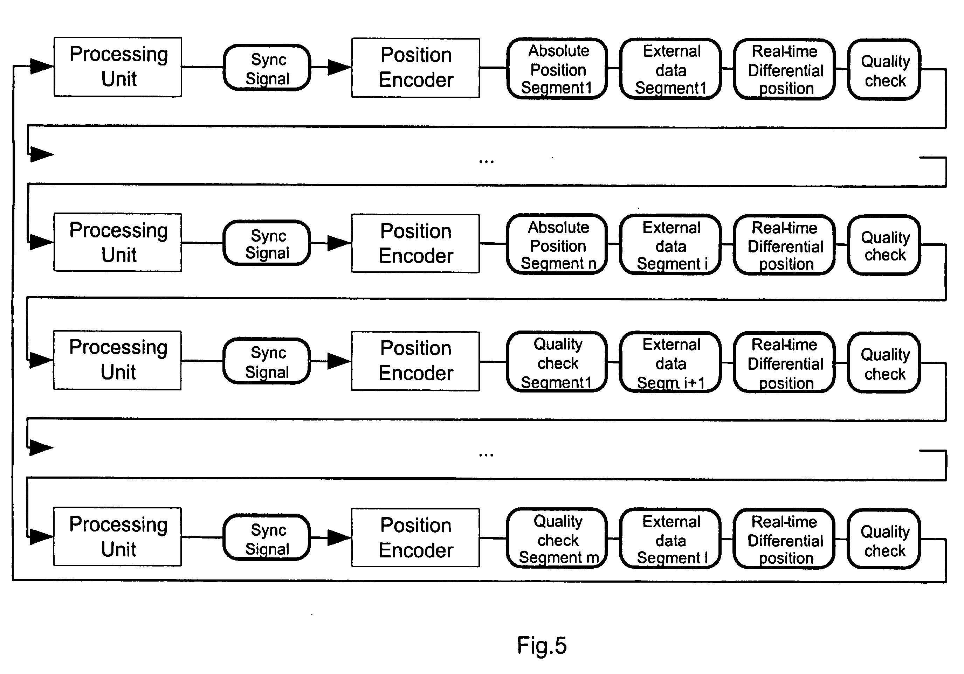

Figur 5 zeigt ein weiteres Datenübertragungsprotokoll mit mehreren Frames, wobei jeweils eine Zeile des schematischen Datenübertragungsprotokolls ein Frame darstellt und zur besseren Übersicht die zusätzlichen Positionsdatenanforderungssignale gemäß Figur 2 mit den nachfolgend übertragenen Daten ausgelassen wurden. In diesem Datenübertragungsprotokoll werden zusätzlich zu den als Differenzdaten übertragenen Positionsdaten, den zusätzlich in Datensegmenten übertragenen absoluten Positionsdaten und den Daten des CRC-Verfahrens weitere Daten (External data) beispielsweise von den zuvor beschriebenen weiteren Messsystemen in Datensegmenten (External data Segment 1 bis 1) übertragen.

Allen beschriebenen Datenübertragungsprotokollen ist gemein, dass in jedem Frame ein Triggerimpuls und wenigstens ein Positionsdatenanforderungssignal übertragen wird, wobei sowohl auf den Triggerimpuls als auch auf das Positionsdatenanforderungssignal die aufgenommenen Positionsdaten entweder als absolute Positionsdaten oder als Differenzdaten übertragen werden. Die weiteren anhand der Figuren 3 bis 5 beschriebenen Übertragungen der unterschiedlichen Daten können einzeln oder beliebig miteinander kombiniert zusätzlich übertragen werden.

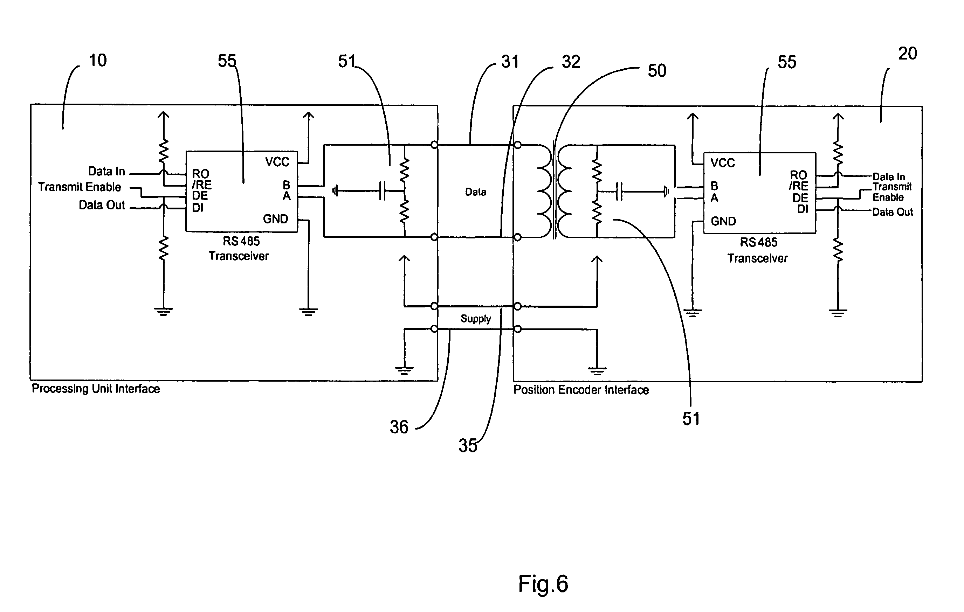

Figur 6 zeigt eine Schaltungsanordnung für die Übertragung der Daten zwischen der Steuereinheit 10 und dem Positionsmesssystem 20 mit vier Leitungen, wovon zwei Leitungen die Datenleitungen 31, 32 bilden und über zwei weitere Leitungen 35, 36 die Strom- und Spannungsversorgung des Positionsmesssystems 20 erfolgt. Die Datenleitungen 31, 32 sind insbesondere verdrillt, wobei die zu übertragenen Daten insbesondere differentiell auf den Datenleitungen 31, 32 übertragen werden. Sowohl auf Seiten des Positionsmesssystem 20 als auch auf Seiten der Steuereinheit 10 ist eine Sende- und Empfangsschaltung 55 angeordnet, an welche sich ein Busabschluss 51 zur Filterung von Gleichtaktstörungen anschließt. Dadurch wird eine sehr robuste Schaltung erzielt, welche insbesondere in direkter Umgebung des Motors des Positionsmesssystems angeordnet werden kann, ohne dass nennenswerte Störungen auftreten. Zwischen den Datenleitungen 31, 32 und dem Busabschluss 51 ist auf Seiten des Positionsmesssystem 20 ein Übertrager 50 zur galvanischen Trennung sowie zur Ein- und Auskopplung der Daten auf die Datenleitungen 31, 32 angeordnet.

Figur 7 zeigt eine Schaltungsanordnung für die Übertragung der Daten zwischen der Steuereinheit 10 und dem Positionsmesssystem 20 mit nur zwei Leitungen, welche einerseits die Datenleitungen 31, 32 bilden und welche gleichzeitig als Versorgungsleitungen des Positionsmesssystems 20 dienen. Die zu übertragenen Daten werden sowohl auf Seiten der Steuereinheit 10 als auch auf Seiten des Positionsmesssystems 20 über jeweils einen Übertrager 50 eingekoppelt. Sowohl zwischen der Sende- und Empfangsschaltung 55 der Steuereinheit 10 und dem zugehörigen Übertrager 50 als auch zwischen der Sende- und Empfangsschaltung 55 des Positionsmesssystems 20 und dem zugehörigen Übertrager 50 ist ein Busabschluss 52 angeordnet. Zum Schutz der Sende- und Empfangsschaltung 55 wird eine Schutzschaltung 53, insbesondere eine Suppressordiode, ergänzt. Dadurch wird es insbesondere ermöglicht, die beiden Datenleitungen 31, 32 auch direkt in das zu dem Motor des Positionsmesssystems führende Kabel zu integrieren, ohne Störungen befürchten zu müssen. Die Versorgungsspannung des Positionsmesssystems 20 wird über die Ein- bzw. Auskopplerschaltung 54 auf die Datenleitungen 31, 32 aufgebracht bzw. entnommen.

### Bezugszeichenliste

- 10: Steuereinheit

- 20: Positionsmesssystem
- 22: Kommunikationseinheit
- 24: Datenaufnahmeeinheit
- 26: Speichereinheit
- 28: Messsystem

- 31: Datenleitung
- 32: Datenleitung

- 35: Versorgungsleitung
- 36: Versorgungsleitung

- 40: Triggerimpuls
- 42: Positionsanforderungssignal

- 50: Übertrager
- 51: Busabschluss
- 52: Busabschluss
- 53: Schutzschaltung
- 54: Ein- bzw. Auskopplerschaltung
- 55: Sende- und Empfangsschaltung

## Patentansprüche

1. Verfahren zur digitalen, bidirektionalen Datenübertragung zwischen einer Steuereinheit und einem Positionsmesssystem basierend auf der Übertragung von Frames einer vorgegebenen Bitlänge, wobei in jedem Frame wenigstens eine erste Bitlänge für die Sendung von Daten von der Steuereinheit zu dem Positionsmesssystem und wenigstens eine zweite Bitlänge für die Sendung von Daten von dem Positionsmesssystem zu der Steuereinheit vorgesehen ist, wobei ein Zeitschlitz in dem Frame vorgesehen ist, in welchem weder von der Steuereinheit an das Positionsmessystem noch von dem Positionsmesssystem zu der Steuereinheit Daten übertragen werden und in welchem ein Triggerimpuls von der Steuereinheit an das Positionsmesssystem übertragen wird, welcher eine Positionsdatenaufnahme bei dem Positionsmesssystem triggert,
**dadurch gekennzeichnet, dass** ein Taktsignal zur Synchronisierung der Steuereinheit und des Positionsmesssystems innerhalb der ersten Bitlänge von der Steuereinheit zu dem Positionsmesssystem übertragen wird, dass nach der durch den Triggerimpuls getriggerten Positionsdatenaufnahme die aufgenommenen Positionsdaten von dem Positionsmesssystem an die Steuereinheit übertragen werden und dass zwischen der Übertragung von zwei aufeinanderfolgenden Triggerimpulsen wenigstens ein zusätzliches Positionsdatenanforderungssignal von der Steuereinheit an das Positionsmesssystem übertragen wird, welches eine weitere Positionsdatenaufnahme und eine anschließende Übertragung der aufgenommenen Positionsdaten von dem Positionsmesssystem an die Steuereinheit triggert, wobei die Triggerimpulse extern vorgegeben werden, während die zusätzlichen Positionsdatenanforderungssignale intern in der Steuereinheit generiert werden.

2. Verfahren nach Anspruch 1,
**dadurch gekennzeichnet, dass** in dem Zeitintervall zwischen zwei Triggerimpulsen periodisch mehrere Positionsanforderungssignale von der Steuereinheit an das Positionsmesssystem übertragen werden.

3. Verfahren nach einem der vorhergehenden Ansprüche,
**dadurch gekennzeichnet, dass** die Zeit zwischen zwei Triggerimpulsen ein Vielfaches der Zeit zwischen zwei Positionsanforderungssignalen ist.

4. Verfahren nach einem der vorhergehenden Ansprüche,
**dadurch gekennzeichnet, dass** die Datenübertragung über zwei Leitungen, insbesondere auf zwei zwischen der Steuereinheit und dem Positionsmesssystem angeordneten Versorgungsleitungen erfolgt.

5. Verfahren nach Anspruch 4,
**dadurch gekennzeichnet, dass** die Datenübertragung auf den zwei Leitungen differentiell erfolgt.

6. Verfahren nach einem der vorhergehenden Ansprüche,
**dadurch gekennzeichnet, dass** bei der Datenübertragung ein Gleichspannungsausgleich gewährleistet ist, insbesondere durch Verwendung eines 8B/10B-Codes.

7. Verfahren nach einem der vorhergehenden Ansprüche,
**dadurch gekennzeichnet, dass** die Positionsdaten als Differenzdaten erster oder zweiter Ordnung übertragen werden.

8. Verfahren nach Anspruch 7,
**dadurch gekennzeichnet, dass** nach einer vorgegebenen Anzahl von Differenzdaten, insbesondere nach zwei, vier oder acht übertragenen Differenzdaten, die Positionsdaten als absolute Daten übertragen werden.

9. Verfahren nach einem der vorhergehenden Ansprüche,
**dadurch gekennzeichnet, dass** die Datenübertragung auf Fehler überprüft wird, insbesondere durch ein CRC(cyclic redundancy check)-Verfahren.

10. Verfahren nach einem der vorhergehenden Ansprüche,
**dadurch gekennzeichnet, dass** die Datenübertragung redundant erfolgt.

11. Verfahren nach einem der vorhergehenden Ansprüche,
**dadurch gekennzeichnet, dass** zusätzlich zu den Positionsdaten weitere Daten, insbesondere Messdaten von weiteren Messsystemen, deren Datenaufnahme insbesondere durch das Triggersignal getriggert werden kann, übertragen werden.

12. Verfahren nach Anspruch 11,
**dadurch gekennzeichnet, dass** die weiteren Messsyteme als Beschleunigungssensoren, Vibrationssensoren, Drehmomentsensoren oder Temperatursensoren ausgebildet sind.

13. Verfahren nach einem der vorhergehenden Ansprüche,
**dadurch gekennzeichnet, dass** die einzelnen zu übertragenen Daten in Datensegmente geteilt werden.

14. System mit einer Steuereinheit und einem Positionsmesssystem, zwischen welchen bidirektional Daten übertragen werden, wobei die Übertragung der Daten nach einem Verfahren gemäß einem der vorhergehenden Ansprüche abläuft.

15. System nach Anspruch 14,
**dadurch gekennzeichnet, dass** die Positionsmesseinheiten als Drehgeber ausgebildet sind.

16. System nach einem der Ansprüche 14 bis 15,
**dadurch gekennzeichnet, dass** zwischen der Steuereinheit und dem Positionsmesssystem zwei Versorgungsleitungen angeordnet sind, welche gleichzeitig zur Datenübertragung verwendet werden.

17. System nach einem der Ansprüche 14 bis 16,
**dadurch gekennzeichnet, dass** die Daten über Datenleitungen übertragen werden, welche in ein Motorkabel integriert sind.

## Claims

1. A method of digital, bidirectional data transmission between a control unit and a position measurement system on the basis of the transmission of frames of a pre-set bit length, wherein at least one first bit length for sending data from the control unit to the position measurement system and at least one second bit length for sending data from the position measurement system to the control unit are provided in each frame, wherein a time slot is provided in the frame in which data are not transmitted either from the control unit to the position measurement system or from the position measurement system to the control unit and in which a trigger pulse, which triggers a recording of the position data at the position measurement system, is transmitted from the control unit to the position measurement system, **characterized in that** a clock-time signal for synchronizing the control unit and the position measurement system is transmitted within the first bit length from the control unit to the position measurement system, after the recording of the position data triggered by the trigger pulse the recorded position data are transmitted from the position measurement system to the control unit, and between the transmission of two successive trigger pulses at least one additional position data request signal is transmitted from the control unit to the position measurement system, which triggers a further recording of the position data and a subsequent transmission of the recorded position data from the position measurement system to the control unit, wherein the trigger pulses are pre-set externally whilst the additional position data request signals are generated internally in the control unit.

2. A method according to claim 1, **characterized in that** in the time interval between two trigger pulses a multiplicity of position request signals are transmitted from the control unit to the position measurement system.

3. A method according to one of the preceding claims, **characterized in that** the time between two trigger pulses is a multiple of the time between two position request signals.

4. A method according to any one of the preceding claims, **characterized in that** the data transmission is carried out by way of two lines, in particular on two supply lines arranged between the control unit and the position measurement system.

5. A method according to claim 4, **characterized in that** the data transmission is carried out differentially on the two lines.

6. A method according to any one of the preceding claims, **characterized in that** with the data transmission a d.c. voltage compensation is provided, in particular by using an 8B/10B code.

7. A method according to any one of the preceding claims, **characterized in that** the position data are transmitted as difference data of the first or second order.

8. A method according to claim 7, **characterized in that** after a pre-set number of difference data, in particular after two, four or eight transmitted difference data, the position data are transmitted as absolute data.

9. A method according to any one of the preceding claims, **characterized in that** the data transmission is checked for errors, in particular by a CRC (cyclic redundancy check) method.

10. A method according to any one of the preceding claims, **characterized in that** the data transmission is carried out in a redundant manner.

11. A method according to any one of the preceding claims, **characterized in that** further data, in particular measurement data from further measurement systems, the data recording of which can be triggered in particular by the trigger signal, are transmitted in addition to the position data.

12. A method according to claim 11, **characterized in that** the further measurement systems are designed in the form of acceleration sensors, vibration sensors, torque sensors or temperature sensors.

13. A method according to any one of the preceding claims, **characterized in that** the individual data to be transmitted are divided into data segments.

14. A system with a control unit and a position measurement system, between which bidirectional data are transmitted, wherein the transmission of the data is carried out in accordance with a method according to any one of the preceding claims.

15. A system according to claim 14, **characterized in that** the position measurement units are designed in the form of rotary encoders.

16. A system according to one of claims 14 to 15, **characterized in that** two supply lines, which are used at the same time for data transmission, are arranged between the control unit and the position measurement system.

17. A system according to any one of claims 14 to 16, **characterized in that** the data are transmitted by way of data lines which are integrated into a motor cable.

## Revendications

1. Procédé de transmission bidirectionnelle de données numériques entre une unité de commande et un système de mesure de position fondé sur la transmission de trames d'une longueur de bits prédéterminée,
* chaque trame ayant au moins une première longueur de bits pour l'émission de données par l'unité de commande vers le système de mesure de position et au moins une seconde longueur de bits pour l'émission de données par le système de mesure de position vers l'unité de commande,
* la trame ayant une fenêtre de temps dans laquelle on ne transmet aucune données ni à partir de l'unité de commande vers le système de mesure de position, ni à partir du système de mesure de position vers l'unité de commande et dans laquelle on transmet une impulsion de déclenchement de l'unité de commande vers le système de mesure de position, cette impulsion de déclenchement lançant la saisie de données de position dans le système de mesure de position,
procédé **caractérisé en ce qu'**
- un signal d'horloge est transmis pour synchroniser l'unité de commande et le système de mesure de position dans la première longueur de bits par l'unité de commande vers le système de mesure de position,
- après la saisie de données de position lancée par l'impulsion de déclenchement, les données de position reçues sont transmises par le système de mesure de position à l'unité de commande, et
- entre la transmission de deux impulsions de déclenchement successives, on transmet au moins un signal de requête de données de position supplémentaire, de l'unité de commande au système de mesure de position ce signal déclenchant une autre saisie de données de position et une transmission consécutive des données de position reçues par le système de mesure de position à l'unité de commande,
* les impulsions de déclenchement étant prédéfinies de manière externe alors que les signaux de requête de données de position supplémentaire sont générés de manière interne dans l'unité de commande.

2. Procédé selon la revendication 1,
**caractérisé en ce que**
dans l'intervalle entre deux impulsions de déclenchement, on transmet périodiquement plusieurs signaux de requête de position par l'unité de commande au système de mesure de position.

3. Procédé selon l'une des revendications précédentes, **caractérisé en ce que**
le temps compris entre deux impulsions de déclenchement est un multiple du temps compris entre deux signaux de requête de position.

4. Procédé selon l'une des revendications précédentes,
**caractérisé en ce que**
la transmission de données se fait par deux lignes, notamment par deux lignes d'alimentation entre l'unité de commande et le système de mesure de position.

5. Procédé selon la revendication 4,
**caractérisé en ce qu'**
on effectue la transmission des données de manière différentielle sur les deux lignes.

6. Procédé selon l'une des revendications précédentes,
**caractérisé en ce que**
lors de la transmission des données, on équilibre les tensions continues, notamment par l'application des codes 8B/10B.

7. Procédé selon l'une des revendications précédentes,
**caractérisé en ce que**
les données de position sont transmises comme données de différence du premier et du second ordre.

8. Procédé selon la revendication 7,
**caractérisé en ce qu'**
après un nombre prédéfini de données de différence, notamment après deux, quatre ou huit données de différence transmises, on transmet les données de position sous la forme de données, absolues.

9. Procédé selon l'une des revendications précédentes,
**caractérisé en ce qu'**
on contrôle les erreurs dans la transmission des données, notamment par le procédé de contrôle CRC (Contrôle de redondance cyclique).

10. Procédé selon l'une des revendications précédentes,
**caractérisé en ce qu'**
on effectue la transmission de données de manière redondante.

11. Procédé selon l'une des revendications précédentes,
**caractérisé en ce qu'**
en plus des données de position, on transmet d'autres données, notamment des données de mesure provenant d'autres systèmes de mesure dont la saisie des données est déclenchée en particulier par le signal de déclenchement.

12. Procédé selon la revendication 11,
**caractérisé en ce que**
les autres systèmes de données sont des capteurs d'accélération, des capteurs de vibrations, des capteurs de couple ou des capteurs de température.

13. Procédé selon l'une des revendications précédentes,
**caractérisé en ce que**
les données à transmettre isolément sont divisées en segments de données.

14. Système comportant une unité de commande et un système de mesure de position entre lesquels sont transmises des données de manière bidirectionnelle, la transmission des données se faisant selon un procédé de l'une quelconque des revendications précédentes.

15. Système selon la revendication 14,
**caractérisé en ce que**
les unités de mesure de position sont des capteurs de rotation.

16. Procédé selon l'une des revendications 14 et 15,
**caractérisé par**
deux lignes d'alimentation entre l'unité de commande et le système de mesure de position, ces lignes servant en même temps à la transmission de données.

17. Procédé selon l'une des revendications 14 à 16,
**caractérisé en ce que**
les données sont transmises par des lignes de données intégrées dans un câble de moteur.
